# FASCICULE DE BREVET EUROPEEN

(11) **EP 0 389 339 B1**
(45) Date de publication et mention de la délivrance du brevet: **07.06.1995**
(21) Numéro de dépôt: 90400711.9
(22) Date de dépôt: 16.03.1990
(51) Int. Cl.: H04N 7/173

(54) **Réseau de distribution interactive d'informations vidéo, audio et télématiques**
Interaktives Verteilnetz für Video-, Ton- und Computermitteilungsnachrichten
Network for the interactive distribution of video, audio and computer communication information

(30) Priorité: 21.03.1989 FR 8903671
(43) Date de publication de la demande: 26.09.1990
(73) Titulaire: THOMSON multimedia, 92400 Courbevoie (FR)
(72) Inventeur: Pham Van Cang, Luc, F-92045 Paris La Défense (FR)
(74) Mandataire: Ruellan-Lemonnier, Brigitte

(56) Documents cités:
- EP-A- 0 096 327
- WO-A-82/02639
- US-A- 4 302 771

## Description

La présente invention se rapporte à un réseau de distribution interactive d'informations vidéo, audio et télématiques.

La distribution par câble de signaux vidéo vers un ensemble d'abonnés localisés dans une aire restreinte, par exemple un immeuble, peut se faire à partir d'un centre distributeur d'où partent vers chaque abonné des câbles destinés à véhiculer un programme choisi parmi un ensemble dont dispose le centre distributeur. L'abonné sélectionne un programme grâce à un moyen d'accès à un dispositif de commutation, couramment dénommé "grille de commutation" et situé dans le centre distributeur. Ce dispositif de commutation permet d'établir une connection entre le câble individuel de l'abonné et la source du programme choisi. Ce moyen d'accès peut utiliser, pour envoyer des signaux de commande au dispositif de commutation, le câble servant à transmettre les programmes à l'abonné. Un réseau connu de ce type permet d'établir des liaisons entre M sources d'information à distribuer et un ensemble de N usagers désirant recevoir à la demande l'un des programmes des sources arrivant au centre distributeur. L'avantage d'un tel réseau, qui n'a à transmettre qu'un programme à la fois, est de permettre l'utilisation de câbles de faible coût, faciles à poser, qui sont chargés de transmettre à distance modérée un signal dont le gabarit de fréquence tient dans une bande passante limitée. La gestion des liaisons individuelles de ce réseau à câblage en étoile peut être assurée à l'aide de moyens logiques de commande utilisant un microprocesseur.

Il est connu par le document WO-A-82/02639 de traiter séquentiellement les demandes de sélection formulées par les abonnés du réseau en les faisant parvenir sur un bus destiné à cet usage où elles sont associées à l'adresse du demandeur.Ces demandes sont traitées l'une après l'autre, ce qui permet de vérifier la régularité des demandes et d'organiser la tarification.

L'inconvénient de la gestion par microprocesseur des demandes de sélection est d'introduire un délai dans la satisfaction des demandes et de multiplier des moyens qui pourraient être communs à un grand nombre d'utilisateurs. Il en résulte un manque de souplesse dans l'adaptation à des besoins plus ou moins importants, des problèmes de connexion délicats à résoudre,et une fiabilité plus difficile à assurer.

La présente invention a pour objet un réseau du type à câblage en étoile qui permette de satisfaire rapidement les demandes des abonnés, qui soit simple à réaliser et le moins onéreux possible.

Le réseau conforme à la présente invention, du type à câblage en étoile à partir d'un centre de distribution,les abonnés dépendant du centre de distribution disposant de dispositifs de télécommande leur permettant de choisir l'un des programmes proposés par ce centre, le centre de distribution comportant un bus vidéo relié à des sources d'informations, et pour chaque abonné un module de commutation télécommandé par l'abonné, est caractérisé par le fait que chaque module de commutation comporte un multiplexeur et un circuit de détection et de décodage de signaux de télécommande pour commander, dans le multiplexeur, la sélection de la source demandée afin d'établir directement un branchement à cette source, les différents modules de commutation étant reliés à un processeur de gestion du centre.

De façon avantageuse,le processeur contrôle périodiquement la conformité des branchements en cours. Lorsque le processeur reconnaît une commutation non autorisée, il la modifie autoritairement en agissant sur le module mis en cause.Selon un mode de réalisation, un module de commutation comporte un multiplexeur relié d'un côté au bus vidéo, et de l'autre côté, via un préamplificateur-correcteur et un amplificateur de puissance, au câble de liaison vers l'abonné, ce câble de liaison étant également relié, dans le centre distributeur, à un circuit détecteur-décodeur de télécommande via un filtre, ce circuit détecteur étant relié à l'entrée de commande du multiplexeur et au processeur de gestion du centre.

La présente invention sera mieux comprise à la lecture de la description détaillée d'un mode de réalisation, pris comme exemple non limitatif et illustré par le dessin annexé, sur lequel:
- la figure 1 est un bloc-diagramme partiel d'un réseau de télédistribution de l'art antérieur;
- la figure 2 est un bloc-diagramme partiel d'un réseau de télédistribution conforme à l'invention;
- la figure 3 est un bloc-diagramme d'un module de commutation du réseau de la figure 2;
- la figure 4 est un bloc-diagramme de l'interface de bus de micro-ordinateur du module de la figure 3; et
- la figure 5 est un bloc-diagramme d'une partie du module de la figure 3 montrant ses circuits de liaison au bus local de commande.

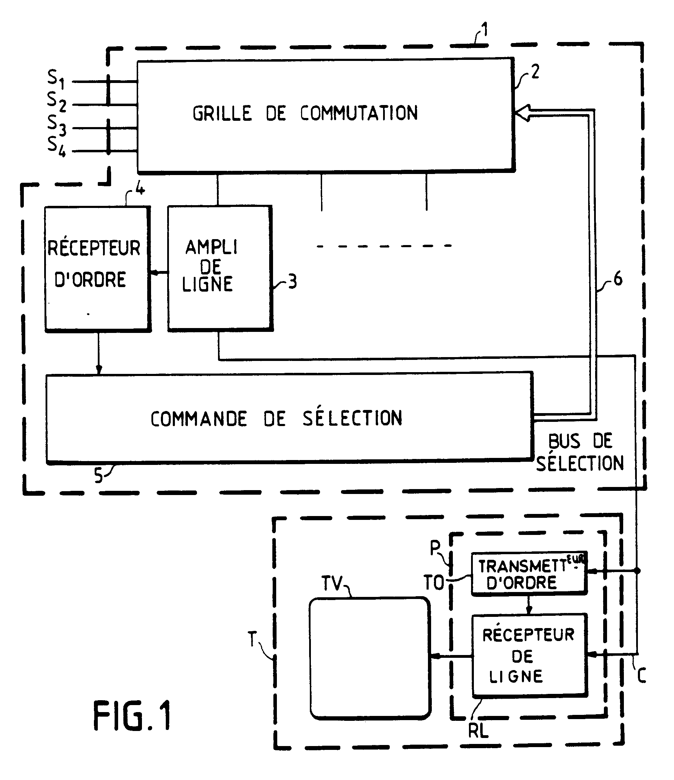

Le réseau de télédistribution représenté de façon simplifiée en figure 1 comporte essentiellement un centre de distribution 1 recevant, par exemple via un câble ou depuis un récepteur d'émissions transmises par satellite, M sources de programmes (quatre sur la figure 1, référencées S1 à S4) pour les retransmettre à la demande à des abonnés faisant partie d'un ensemble de N abonnés reliés à ce centre.

Le centre distributeur 1 est relié à chacun des N terminaux d'abonnés par un câble de liaison individuel C, formant ainsi un réseau à câblage en étoile. Sur la figure 1, on n'a représenté qu'un seul de ces terminaux, référencé T. Le terminal T comprend essentiellement un poste d'abonné P comportant un récepteur de ligne RL et un transmetteur d'ordre TO, et il est relié à un appareil utilisateur, dans le cas présent un téléviseur TV.

Le centre distributeur 1 comprend une grille de commutation 2 à M entrées et N sorties correspondant aux N abonnés du centre 1. Le câble C est relié, dans le centre 1, à un amplificateur de ligne 3, lui-même relié à une des N sorties de la grille 2 et à un récepteur d'ordre 4. Le récepteur d'ordre 4 est relié à un dispositif 5 de commande de sélection comportant un microprocesseur et commandant la grille 2 via un bus de sélection 6.

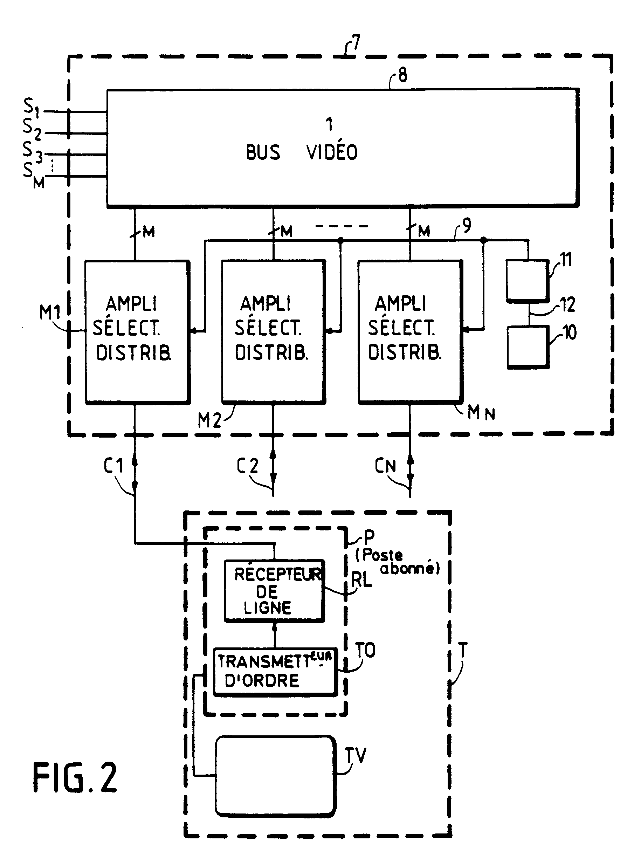

Le réseau de télédistribution de l'invention, représenté partiellement en figure 2, utilise une architecture modulaire au niveau du centre distributeur 7. Ce centre 7 comporte un bus 8 relié à M sources (S1 à SM) de programmes. Par la suite, ce bus sera appelé bus vidéo, mais il est bien entendu que les sources auxquelles il est relié peuvent aussi bien être des sources vidéo que télématiques, audio ou autres. Le bus 8 est relié à N modules de sélection M1 à MN, chacun de ces N modules étant relié par un câble de liaison, C1 à CN respectivement, à un des N terminaux d'abonnés desservis par le centre 7. Il est bien entendu que le centre 7 peut comporter un nombre de modules supérieur au nombre d'abonnés, en prévision du rattachement ultérieur d'autres abonnés. Sur la figure 2, on n'a représenté qu'un seul terminal T, semblable à celui de la figure 1. Les N modules sont en outre reliés à un bus local de commande 9 lui-même relié à un micro-ordinateur 10 via une interface 11 et un bus informatique 12. Chacun de ces modules est capable de satisfaire lui-même une demande de connexion à une source de programme formulée à distance par l'abonné correspondant.

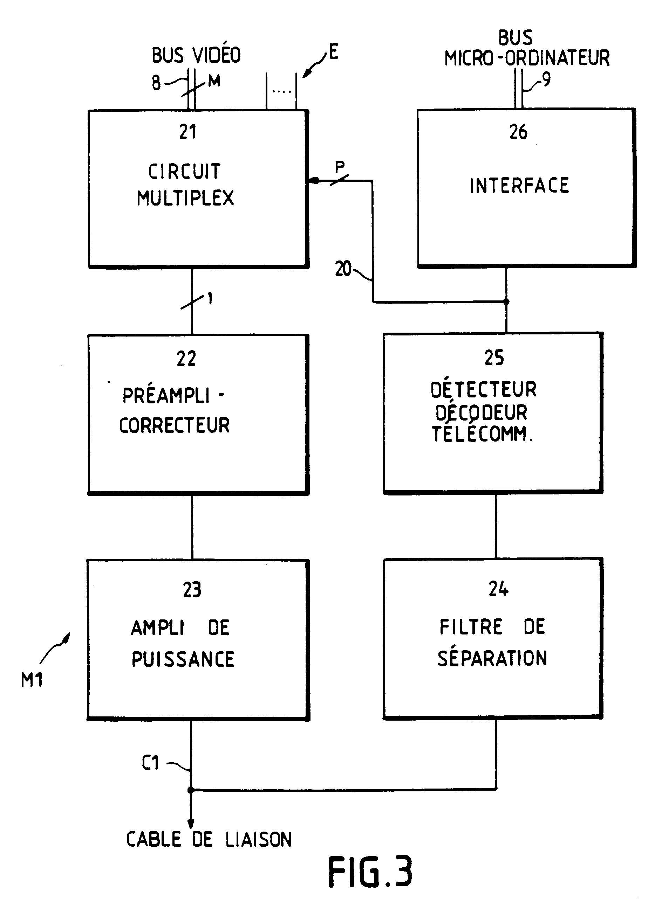

Sur la figure 3, on a représenté le bloc-diagramme d'un des N modules de sélection, par exemple le module M1. Ce module M1 comporte un multiplexeur 21 à M entrées et une sortie. Les M entrées du multiplexeur 21 sont respectivement reliées aux M conducteurs du bus vidéo 8, et sa sortie est reliée via un préamplificateur-correcteur 22 à un amplificateur de puissance 23 attaquant le câble de liaison C1. En variante,le multiplexeur 21 peut comporter une ou plusieurs autres entrées E non reliées au bus 8 mais à d'autres dispositifs optionnels (sources spéciales, appareils de test,...).

Dans le module M1, le câble C1 est d'autre part relié via un filtre de séparation 24 à un circuit 25 détecteur et décodeur de télécommande. La sortie du circuit 25 est reliée à l'entrée de commande du multiplexeur 21 par un bus 20 à P conducteurs. Ce bus 20 est également relié via une interface 26 au bus 9 de micro-ordinateur.

A la sortie du multiplexeur 21, on dispose du programme diffusé par celle des M sources qui est sélectionnée par son entrée de commande à P fils. Ce programme consiste, dans le présent exemple, en un signal vidéo qu'il faut pré-accentuer pour compenser les distorsions d'amplitude (en fonction de la fréquence) introduites par la transmission sur le câble de liaison (C1). Lorsque le câble utilisé est un câble comportant une paire de conducteurs à usage téléphonique ou télématique, on peut éviter le rayonnement intempestif de cette ligne, ainsi que les perturbations dues aux champs électriques extérieurs, par une excitation symétrique des conducteurs de la paire en question. Ces deux fonctions de pré-accentuation et d'excitation du câble de liaison sont assurées par le préamplificateur-correcteur 22 et l'amplificateur de ligne 23, ce dernier étant symétrique ou asymétrique selon le type de câble utilisé (câble bifilaire ou coaxial).

Du côté de l'abonné, le câble de liaison est connecté, dans le récepteur de ligne RL, à un circuit adaptateur-compensateur (non représenté en détail) qui, pour des raisons de protection contre les perturbations, est à entrées symétriques si le câble de liaison est bifilaire. Ce circuit adaptateur-compensateur peut, comme le préamplificateur 22, participer à la correction des distorsions du signal survenant lors de son cheminement dans le câble de liaison. Il s'agit ici de post-corrections.

Le filtre 24 sépare les signaux de télécommande, produits par l'abonné et véhiculés par le câble de liaison, de tous les autres signaux transitant par le câble de liaison. Ces signaux de télécommande sont transportés par une sous-porteuse haute fréquence située par exemple au-dessus de la plage de fréquences occupée par un signal vidéo en bande de base et par une sous-porteuse son associée. Le circuit 25 détecte ces signaux de télécommande et les décode pour fournir sur le bus 20 l'adresse de la source demandée par l'abonné, cette adresse commandant, dans le multiplexeur 21, la sélection de cette source.

Grâce aux éléments 21 à 25 du centre distributeur et au poste P, la demande de sélection de l'abonné est satisfaite dès qu'elle est formulée. Cependant, pour gérer le réseau, en particulier pour contrôler les sélections de programmes ainsi réalisées, et s'opposer, le cas échéant à certaines connexions non autorisées par le service offert à l'abonné, ou pour déterminer les temps de connexion en vue d'établir une facturation, il est prévu en outre dans le centre distributeur le micro-ordinateur 10, qui n'est toutefois pas nécessaire pour établir les connexions avec les sources. Dans chaque module M1 à MN l'interface 26 assure la liaison avec ce micro-ordinateur. Cette interface permet de transmettre au micro-ordinateur l'adresse de la source demandée et celle du module en cause (ou de l'abonné) nécessaires aux diverses opérations de gestion. L'interface 26 assure également la liaison dans l'autre sens pour modifier autoritairement l'adressage du multiplexeur 21 lorsque la source désignée par l'abonné ne fait pas partie des sources auxquelles il a le droit de se connecter selon les termes du contrat qu'il a souscrit. Certains programmes peuvent être à diffusion limitée, ce qui représente un premier critère de différentiation qu'aura à faire respecter le micro-ordinateur de gestion. Un autre critère de différentiation résulte du fait que les programmes peuvent être gratuits ou payants selon des modalités convenues entre l'abonné et la société distributrice. La gestion par micro-ordinateur permet aussi de dresser des statistiques d'écoute et de commander la diffusion sur le réseau d'informations sur les services proposés.

Pour décrire de façon plus concrète le réseau conforme a l'invention, on va se référer à un exemple de réseau en étoile desservant 2048 abonnés. Le centre de distribution doit alors comporter 2048 modules tels que le module M1 de la figure 3. Ces modules peuvent être répartis dans des baies électroniques comportant chacune 256 modules agencés quatre par quatre sur 64 cartes enfichables sur un fond de panier où aboutissent les câbles de liaison des abonnés, le bus vidéo et le bus 20 de micro-ordinateur.

Le micro-ordinateur 10 comprend, de façon bien connue en soi et non décrite en détail ici, un microprocesseur, de la mémoire vive, de la mémoire morte, des circuits d'entrée/sortie, et d'autres circuits logiques appropriés.

Dans l'exemple considéré, on peut supposer que dans le champ d'adressage du microprocesseur on a réservé un bloc de 16 adresses à des ports d'entrée et de sortie pour la gestion du réseau de distribution interactive. On peut également supposer que les adresses paires du bloc correspondent à un échange de données représentant l'adresse d'un abonné dans la baie où est situé le module qui lui est affecté. Les adresses impaires du bloc correspondent à un échange de données représentant le numéro de la source d'informations. Si chaque donnée s'exprime par un octet, on voit qu'avec 16 bits se partageant une adresse paire et l'adresse impaire qui suit, on peut désigner dans une baie un abonné et le numéro de source à laquelle il est raccordé lors d'une lecture des états de connexion de cette baie, ou à laquelle il est renvoyé lors d'une phase d'écriture imposant un changement de connexion dans la baie.

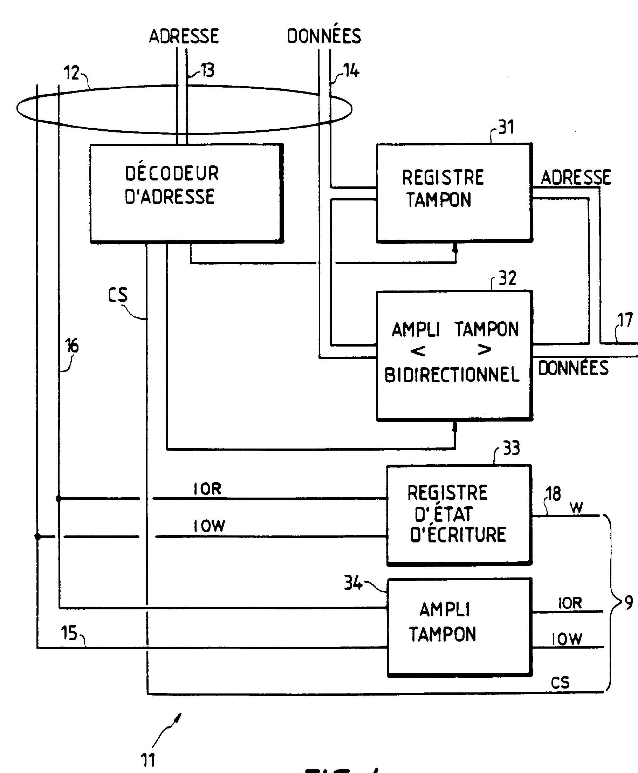

On a représenté sur la figure 4 le bloc-diagramme détaillé de l'interface 11 reliant le bus informatique 12 au bus local 9. Le bus 12 comprend essentiellement des fils d'adresse 13, des fils de données 14, un fil 15 (IOW) et un fil 16 (IOR) respectivement d'écriture et de lecture de ports d'entrée-sortie. Le bus 9 comprend essentiellement des fils 17 d'adresses et de données, un fil 18 de commande d'écriture (W) et des fils IOR, IOW, et CS.Les fils d'adresse 13 sont reliés à un décodeur d'adresse 30 qui fournit au bus 9 une information CS de sélection de puce et qui contrôle l'emmagasinage des données dans un registre tampon 31 et un amplificateur tampon bidirectionnel 32. Ces données sont des numéros d'abonnés transmis par le bus 12 et des numéros de sources qui sont lus ou écrits par le micro-ordinateur et qui transitent par l'amplificateur tampon 32. Les signaux IOR et IOW, indiquant la lecture et l'écriture dans les ports d'entrée/sortie commandent un registre d'états 33 qui ouvre et ferme un cycle d'écriture, grâce à une donnée transmise par la ligne W du bus 9. Un amplificateur tampon 34 met en correspondance les lignes IOR et IOW des bus 9 et 12.

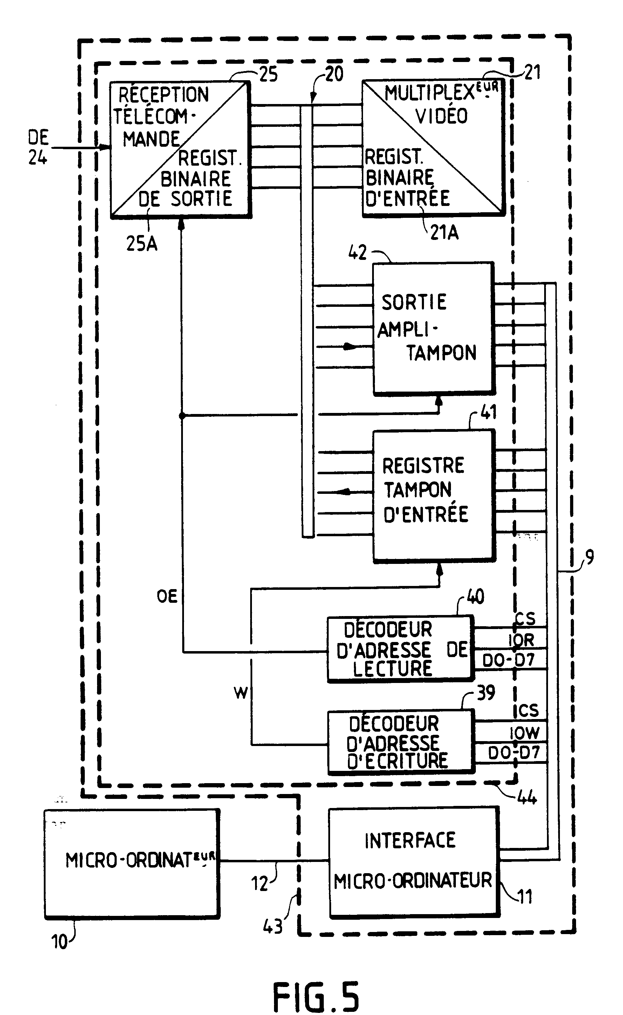

On à représenté en figure 5 le bloc-diagramme détaillé d'un exemple de réalisation d'une partie (essentiellement la partie numérique) d'un module tel que le module M1, avec sa liaison au bus 9 et les éléments 10 à 12. Ce bus 9 peut desservir dans le présent exemple 256 abonnés.

Le circuit 25 comporte un registre binaire de sortie à trois états 25A relié au bus 20, ce registre ayant une entrée de validation reliée à un fil OE lui-même relié à la sortie d'un décodeur d'adresse de lecture 40. Ce fil OE est également relié à l'entrée de commande d'un registre tampon de sortie 42 branché entre les bus 9 et 20. Le multiplexeur 21 comporte un registre binaire d'entrée 21A relié au bus 20. Un décodeur d'adresse d'écriture 39 est relié au bus 9. Sa sortie W est reliée à l'entrée de commande d'un registre tampon d'entrée 41 branché entre les bus 9 et 20.

Lorsqu'un abonné effectue le choix d'une source par l'envoi d'un signal de télécommande via son câble de liaison, un nombre binaire représentant le numéro de cette source est délivré sur le bus 20 par le registre 25A du circuit 25 et transféré dans le registre 21A du multiplexeur 21 par une impulsion de validation appropriée. Il en résulte la connexion de l'abonné à la source qu'a il choisie sans intervention du micro-ordinateur 10.

La lecture par le micro-ordinateur 10 des branchements sources-abonnés se fait lors d'un cycle au cours duquel: le micro-ordinateur sélectionne au moyen du signal CS la baie dans laquelle se trouve le module de sélection correspondant, envoie sur le bus 12 le numéro de l'abonné à contrôler, et initialise le cycle de lecture en activant la ligne IOR. Le décodeur d'adresse de lecture 40 qui reconnaît ce numéro d'abonné active l'amplificateur tampon 42 correspondant qui transmet sur le bus 9 le numéro, disponible sur le bus 20, de la source que reçoît l'abonné en cause. Avec ce numéro de source et le numéro de l'abonné, on peut créer dans le champ mémoire du micro-ordinateur un tableau d'accès aux sources. Un cycle de lecture séquentielle permet de mettre en mémoire vive tous les couples numéro d'abonné-numéro de source. Pour une centaine d'abonnés, ce chargement dure quelques millisecondes et on peut donc répéter les cycles de lecture à intervalles tels qu'il soit possible de facturer la durée de raccordement à la minute près.

Le tableau d'accès ainsi créé peut mettre en évidence le fait que certains abonnés reçoivent indûment un programme. Des tests de comparaison sont effectués pour dresser un tableau des modifications à imposer aux connexions réclamées et obtenues provisoirement par les abonnés. Le micro-ordinateur déclenche alors un cycle d'écriture pour imposer ces modifications. A cet effet, un numéro d'abonné et un numéro de source d'informations sont placés sur le bus 12, tandis que la ligne IOW est activée.

Ceci a pour effet de mettre à l'état haute impédance les sorties du registre 25A et de désactiver l'amplificateur tampon 42. Le décodeur d'adresse d'écriture 39 active le registre tampon d'entrée 41 qui place sur le bus 20 les P données binaires qui expriment le numéro de la source imposée par le micro-ordinateur au cours du cycle d'écriture. La prise en compte de ces données par le multiplexeur 21 est commandée par une impulsion d'horloge appropriée qui clôt la phase d'écriture. Le cycle d'écriture peut concerner une seule rectification de connexion, mais il est plus simple de prévoir une séquence de plusieurs rectifications relatives à plusieurs abonnés au cours d'un même cycle d'écriture.

Dans la description qui précède, on voit que les connexions sont effectuées à l'initiative des abonnés grâce aux moyens contenus dans les modules respectifs qui leur sont affectés. Le micro-ordinateur sert à scruter les modules pour constituer un état des connexions en cours. Le micro-ordinateur sert ensuite à connecter autoritairement les abonnés, qui sont illégalement reliés à une source non autorisée, sur une source fantôme sans vidéo ou sur une source de messageries qui peut être alimentée par le micro-ordinateur ou par tout autre moyen. Ainsi, l'abonné auquel on laisse un bref délai de consultation du programme auquel il s'est illégalement raccordé, est détourné de celui-ci et branché sur une messagerie qui peut l'inviter à souscrire un contrat élargissant ses possibilités de connexion.

Dès que l'abonné ne veut plus recevoir de programme en provenance du centre distributeur, et veut passer à la réception d'un programme diffusé par ondes hertziennes, il est avantageux qu'il ne puisse le faire qu'en demandant au centre distributeur le branchement sur un canal fantôme, ainsi que cela est décrit dans la demande de brevet déposée par la Demanderesse le même jour que la présente demande et intitulée "Dispositif de détection de fin de connexion à un programme payant reçu par un poste d'abonné via un réseau de télédistribution interactive", correspondant au document EP 0389340 publié le 26.09.90.

Par son organisation modulaire permettant la connexion d'un abonné sans passer par un micrordinateur, on obtient une bonne fiabilité et une réaction immédiate à la demande de l'abonné. La défaillance du micro-ordinateur n'empêche pas la diffusion des programmes vers les abonnés, mais peut seulement empêcher la supervision des connexions en cours et provoquer les détournements nécessaires pour empêcher un abonné de recevoir illégalement un programme. L'organisation modulaire du centre de distribution favorise la souplesse d'installation et d'extension du réseau de distribution interactive.

## Revendications

1. Réseau de distribution interactive d'informations vidéo, audio et télématiques, du type à câblage en étoile à partir d'un centre de distribution, les abonnés dépendant du centre de distribution disposant de dispositifs de télécommande leur permettant de choisir l'un des programmes proposés par ce centre, le centre de distribution (1) comportant un bus vidéo (8) relié à des sources d'informations (S1 à SM), et pour chaque abonné un module de commutation (M1) télécommandé par l'abonné, caractérisé par le fait que chaque module de commutation comporte un multiplexeur (21) et un circuit (25) de détection et de décodage de signaux de télécommande pour commander, dans le multiplexeur, la sélection de la source demandée afin d'établir directement un branchement à cette source, les différents modules de commutation étant reliés à un processeur (10) de gestion du centre.

2. Réseau selon la revendication 1, caractérisé par le fait que le processeur contrôle périodiquement la conformité des branchements en cours.

3. Réseau selon la revendication 2, caractérisé par le fait que lorsque le processeur reconnaît une commutation non autorisée, il la modifie autoritairement en agissant sur le module mis en cause.

4. Réseau selon l'une quelconque des revendications précédentes, caractérisé par le fait que les ordres de télécommande émis par un abonné transitent par le câble de liaison transmettant les programmes du centre de distribution.

5. Réseau selon l'une quelconque des revendications précédentes, caractérisé par le fait que dans chaque module de commutation le multiplexeur (21) est relié d'un côté au bus vidéo et de l'autre côté, via un préamplificateur-correcteur (22) et un amplificateur de puissance (23) au câble de liaison vers l'abonné (C1), ce câble étant également relié, dans le centre distributeur, au circuit (25) de détection et de décodage de signaux de télécommande (25) via un filtre (24), ce circuit de détection étant relié à l'entrée de commande du multiplexeur et au processeur de gestion du centre.

6. Réseau selon la revendication 5, caractérisé par le fait que le multiplexeur comporte au moins une autre entrée (E) non reliée au bus vidéo.

7. Réseau selon l'une quelconque des revendications précédentes, caractérisé par le fait que chaque abonné dispose d'un terminal (T) relié au centre de distribution par le câble de liaison, ledit terminal comprenant des moyens d'émission de télécommande (TO) et des moyens de raccordement (RL) d'un appareil utilisateur (TV) des signaux correspondant au programme sélectionné.

8. Réseau selon l'une quelconque des revendications précédentes, caractérisé par le fait que le programme sélectionné est transmis en bande de base et en ce que les signaux de télécommande sont transmis au moyen d'une onde porteuse.

9. Réseau selon l'une quelconque des revendications précédentes, caractérisé par le fait que ledit câble de liaison est associé à des moyens (22) de compensation des distorsions amplitude/fréquence due à la propagation des signaux diffusés.

10. Réseau selon l'une quelconque des revendications précédentes, caractérisé par le fait que ledit câble de liaison comprend au moins une ligne bifilaire.

11. Réseau selon la revendication 10, caractérisé par le fait que la ligne est associée à des moyens (22) atténuant son rayonnement et réduisant les perturbations dues aux champs électriques extérieurs.

## Patentansprüche

1. Interaktives Verteilnetz für Video-, Audio- und Computerkommunikations-Informationen vom Typ mit Sternverkabelung von einer Verteilzentrale aus, wobei die von der Verteilzentrale abhängigen Teilnehmer über Fernsteuereinrichtungen verfügen, die es ihnen ermöglichen, eines der von dieser Verteilzentrale angebotenen Programme auszuwählen, wobei die Verteilzentrale (1) einen Videobus (8) enthält, der mit Informationsquellen (S1 bis SM) verbunden ist, sowie für jeden Teilnehmer einen vom Teilnehmer ferngesteuerten Vermittlungsmodul (M1), dadurch gekennzeichnet, daß jeder Vermittlungsmodul einen Multiplexer (21) und eine Schaltung (25) zur Erfassung und Decodierung von Fernsteuersignalen enthält, um im Multiplexer die Auswahl der gewünschten Quelle zu steuern, damit direkt ein Anschluß zu dieser Quelle hergestellt wird, wobei die verschiedenen Vermittlungsmodule mit einem Leitprozessor (10) der Zentrale verbunden sind.

2. Netz nach Anspruch 1, dadurch gekennzeichnet, daß der Prozessor periodisch die richtige Übereinstimmung der bestehenden Anschlüsse kontrolliert.

3. Netz nach Anspruch 2, dadurch gekennzeichnet, daß der Prozessor, wenn er eine unzulässige Vermittlung erkennt, diese eigenmächtig durch Einwirkung auf den betreffenden Modul ändert.

4. Netz nach einem der vorhergehenden Ansprüche, dadurch gekennzeichnet, daß die von einem Teilnehmer gesendeten Fernsteuerbefehle über das Verbindungskabel laufen, das die Programme von der Verteilzentrale überträgt.

5. Netz nach einem der vorhergehenden Ansprüche, dadurch gekennzeichnet, daß in jedem Vermittlungsmodul der Multiplexer (21) einerseits mit dem Videobus und andrerseits über einen Entzerrer-Vorverstärker (22) und einen Leistungsverstärker (23) mit dem Verbindungskabel zum Teilnehmer (C1) verbunden ist, wobei dieses Kabel in der Verteilzentrale auch mit der Schaltung (25) zur Erfassung und Decodierung von Fernsteuersignalen über ein Filter (24) verbunden ist, wobei diese Erfassungsschaltung mit dem Steuereingang des Multiplexers und mit dem Leitprozessor der Zentrale verbunden ist.

6. Netz nach Anspruch 5, dadurch gekennzeichnet, daß der Multiplexer wenigstens einen weiteren, nicht mit dem Videobus verbundenen Eingang (E) aufweist.

7. Netz nach einem der vorhergehenden Ansprüche, dadurch gekennzeichnet, daß jeder Teilnehmer über ein Terminal (T) verfügt, das mit der Verteilzentrale über das Verbindungskabel verbunden ist, wobei das Terminal Fernsteuer-Sendemittel (TO) und Anschlußmittel (RL) für ein Gerät (TV) zur Verwendung derdem gewählten Programm entsprechenden Signale enthält.

8. Netz nach einem der vorhergehenden Ansprüche, dadurch gekennzeichnet, daß das gewählte Programm im Basisband übertragen wird und daß die Fernsteuersignale mittels einer Trägerwelle übertragen werden.

9. Netz nach einem der vorhergehenden Ansprüche, dadurch gekennzeichnet, daß dem Verbindungskabel Mittel (22) zur Kompensation der durch die Ausbreitung der gesendeten Signale verursachten Amplituden/Frequenz-Verzerrungen zugeordnet sind.

10. Netz nach einem der vorhergehenden Ansprüche, dadurch gekennzeichnet, daß das Verbindungskabel wenigstens eine Zweidrahtleitung enthält.

11. Netz nach Anspruch 10, dadurch gekennzeichnet, daß der Leitung Mittel (22) zugeordnet sind, die ihre Strahlung abschwächen und die von äußeren elektrischen Feldern verursachten Störungen vermindern.

## Claims

1. Network for interactive distribution of video, audio and telematic information, of the type with star cabling from a distribution centre, the subscribers dependent on the distribution centre having remote control devices enabling them to choose one of the programmes offered by this centre, the distribution centre (1) comprising a video bus (8) connected to information sources (S1 to SM), and for each subscriber a switching module (M1) remotely controlled by the subscriber, characterized in that each switching module comprises a multiplexer (21) and a circuit (25) for detecting and decoding remote-control signals so as to control, in the multiplexer, the selection of the requested source in order to establish directly a connection to this source, the various switching modules being connected to a processor (10) for managing the centre.

2. Network according to Claim 1, characterized in that the processor periodically monitors the conformity of the current connections.

3. Network according to Claim 2, characterized in that when the processor recognizes an unauthorized switching, it authoritatively changes it by acting on the module called into question.

4. Network according to any one of the preceding claims, characterized in that the remote control instructions emitted by a subscriber pass through the connection cable transmitting the programmes from the distribution centre.

5. Network according to any one of the preceding claims, characterized in that in each switching module the multiplexer (21) is connected, on one side, to the video bus and, on the other side, via a corrector-preamplifier (22) and a power amplifier (23), to the cable for connection to the subscriber (C1), this cable furthermore being connected, in the distribution centre, to the circuit (25) for detecting and decoding remote-control signals via a filter (24), this detecting circuit being connected to the control input of the multiplexer and to the processor for managing the centre.

6. Network according to Claim 5, characterized in that the multiplexer comprises at least one other input (E) not connected to the video bus.

7. Network according to any one of the preceding claims, characterized in that each subscriber has a terminal (T), connected to the distribution centre by the connection cable, the said terminal comprising means for remote control emission (TO) and means for linking (RL) a set (TV) which uses signals corresponding to the programme selected.

8. Network according to any one of the preceding claims, characterized in that the programme selected is transmitted in baseband mode and in that the remote control signals are transmitted by means of a carrier wave.

9. Network according to any one of the preceding claims, characterized in that the said connection cable is associated with means (22) for compensating the amplitude/frequency distortions due to the spreading of the signals broadcast.

10. Network according to any one of the preceding claims, characterized in that the said connection cable comprises at least one bifilar line.

11. Network according to Claim 10, characterized in that the line is associated with means (22) attenuating its radiation and reducing the perturbations which are due to the external electric fields.
